# FASCICULE DE BREVET EUROPEEN

(11) **EP 2 508 450 B1**
(45) Date de publication et mention de la délivrance du brevet: **18.06.2014**
(21) Numéro de dépôt: 12159585.4
(22) Date de dépôt: 15.03.2012
(51) Int. Cl.: B65G 1/06, G07F 11/58, A21B 1/48, A21B 3/07

(54) **Dispositif de stockage et de prélèvement et procédé pour l'utilisation d'un tel dispositif**
Lager- und Entnahmevorrichtung, und Verfahren zur Verwendung einer solchen Vorrichtung
Storage and retrieval device and method for using such a device

(30) Priorité: 08.04.2011 FR 1153052
(43) Date de publication de la demande: 10.10.2012
(73) Titulaire: Mecondielle-Mecatrónica, Lda, 2845-408 Amora (PT)
(72) Inventeur: Hecht, Jean-Louis, 57470 Hombourg-Haut (FR); Hecht, Jean-Claude, 7520-409 Porto Covo-Sines (PT)
(74) Mandataire: Vièl, Frédérique

(56) Documents cités:
- DE-A1- 1 474 748
- DE-A1-102004 019 905
- DE-A1-102005 012 536
- FR-A1- 2 533 811
- US-B1- 6 883 681

## Description

L'invention concerne un dispositif de stockage et de prélèvement selon le préambule de la revendication 1 ainsi qu'un procédé pour l'utilisation de ce dispositif.

Les dispositifs de stockage et de prélèvement sont couramment utilisés pour la vente de produits alimentaires tels que des pains. On connaît par exemple de EP 0 368 699 A2 un distributeur automatique de baguettes. Le distributeur est composé d'une zone de stockage et d'un convoyeur. La zone de stockage se compose de plusieurs plateaux inclinés, placés les uns au-dessus des autres. L'extrémité inférieure de chaque plateau se termine par une butée qui empêche les baguettes de glisser hors du plateau. Le dispositif de convoyage est muni d'un dispositif de prélèvement fixé sur une chaîne sans fin de sorte que le dispositif de prélèvement peut être déplacé de bas en haut devant les plateaux pour prélever les baguettes puis de haut en bas de l'autre côté du convoyeur pour les déposer sur une rampe qui les conduit à un réchauffeur puis à la trappe de distribution. Le dispositif de prélèvement est constitué de deux crochets fixés par un axe sur la chaîne sans fin et munis d'un contrepoids. À vide, ces deux crochets sont inclinés sous l'effet du contrepoids en direction des plateaux. Deux ouvertures sont réalisées dans la butée des plateaux pour laisser le passage aux crochets lorsqu'ils sont dans cette position inclinée. Si une baguette se trouve dans la partie basse du plateau, elle est saisie par les crochets qui remontent et ceux-ci, sous le poids de la baguette, basculent verticalement de sorte qu'ils ne croisent plus les plateaux. Pour que ce dispositif fonctionne, il faut que les baguettes ou les autres aliments ne collent pas sur les plateaux sans quoi ils ne glisseront pas vers la butée pour être saisis. De surcroît, l'ordre de prélèvement des baguettes est imposé par le mode de fonctionnement du dispositif de prélèvement : les baguettes du plateau inférieur seront d'abord prélevées, puis celles du plateau directement au-dessus et ainsi de suite jusqu'au plateau le plus en haut. Il faut donc attendre que l'ensemble des baguettes ait été prélevé pour recharger le dispositif. Enfin, la baguette risque tout au long du stockage et de la distribution de rouler sur elle-même de sorte qu'en position de distribution, elle n'est pas orientée correctement. Il ne serait pas possible par exemple de cuire une baguette crue ou surgelée avec la face supérieure munie des incisions placée systématiquement au-dessus.

Du document EP 0 337 836 A1, on connaît une machine pour la confection et la distribution de hamburgers. Elle est constituée d'une succession de convoyeurs placés les uns derrière les autres. Sur le premier convoyeur est déposé un steak haché fraîchement reconstitué ou surgelé. Celui-ci est ensuite transmis au deuxième convoyeur qui traverse un four. Au sortir du four, le steak haché cuit quitte le deuxième convoyeur pour passer sur le troisième sur lequel a été déposé préalablement un demi-pain. Le demi-pain et son steak passent en dessous de distributeurs de sauce avant que l'autre demi-pain soit placé sur l'ensemble. Le hamburger quitte alors le troisième convoyeur pour passer sur un quatrième convoyeur sur lequel il est emballé. Dans tous les cas, le steak haché reste sensiblement dans le même plan durant tout le parcours de préparation. Le prélèvement ne peut se faire qu'au sortir d'un unique tapis roulant.

Des documents FR 2 533 811 A1 et DE 10 2004 019905 A1, on connaît un dispositif de stockage et de prélèvement constitué d'un premier convoyeur muni d'un tapis roulant et d'un deuxième convoyeur muni également d'un tapis roulant et parallèle au premier. Des moyens de déplacement sont prévus pour déplacer le deuxième convoyeur dans un mouvement vertical perpendiculaire à sa direction de convoyage de sorte que le deuxième convoyeur peut être déplacé d'une position dans laquelle il est aligné avec le premier convoyeur vers une position de distribution. Des dispositifs conformes au préambule de la revendication 1 sont connus de DE 14 74 748 A1 et de US 6 883 681 B1. Dans ces deux cas, le premier convoyeur est muni de deux ou quatre tapis roulants, tandis que le deuxième convoyeur est muni d'un unique tapis de la largeur des deux ou quatre tapis du premier convoyeur. Les tapis du premier convoyeur ont la même taille et ils tournent aux extrémités autour d'un même axe de rotation. Les distributeurs de ces documents permettent de distribuer un objet prélevé dans un plan différent de celui dans lequel il était initialement stocké. Ils ont cependant pour inconvénient majeur de présenter une discontinuité de support entre le point d'inflexion du tapis roulant du premier convoyeur, lorsqu'il commence à s'enrouler sur son rouleau, et le point d'inflexion du tapis roulant du deuxième convoyeur, lorsqu'il quitte son rouleau. Si l'objet à transférer est trop étroit, comme c'est le cas d'une baguette placée perpendiculairement à la direction de convoyage, cet objet risque de tomber dans l'espace situé entre ces deux rouleaux et de ne pas pouvoir en ressortir. De même si l'objet est trop mou, comme l'est une pizza crue ou mi-cuite, il risque de voir sa partie avant tomber dans cet espace. Si l'objet est collant, comme un pâton de pain cru ou précuit, il risque de ne pas se décoller correctement du premier tapis lorsqu'il arrivera au niveau de cet espace.

L'objectif de l'invention est donc de développer un dispositif de stockage et de prélèvement qui assure un meilleur transfert de l'objet entre le premier convoyeur et le deuxième convoyeur, notamment en assurant une meilleure continuité du support.

Cet objectif est atteint par le dispositif de stockage et de prélèvement de la revendication 1, dans lequel le premier dispositif de convoyage est constitué d'au moins deux bandes de convoyage parallèles placées côte à côte, la première bande s'étendant plus en avant en direction du deuxième dispositif de convoyage d'une distance (d) que la deuxième bande. De même, le deuxième dispositif de convoyage est constitué d'au moins deux bandes de convoyage parallèles placées côte à côte, la première bande s'étendant moins en arrière en direction du premier dispositif de convoyage de la distance (d) que la deuxième bande, les premières bandes étant au moins en partie dans le prolongement l'une de l'autre et les deuxièmes bandes étant au moins en partie dans le prolongement l'une de l'autre, des premiers moyens d'entraînement étant prévus pour entraîner dans un même mouvement les deux bandes du premier dispositif de convoyage et des deuxièmes moyens d'entraînement étant prévus pour entraîner dans un même mouvement les deux bandes du deuxième dispositif de convoyage.

Il est préférable dans ce cas que le premier dispositif de convoyage comprenne une troisième bande de convoyage identique à la première, disposée symétriquement à celle-ci par rapport à la deuxième bande et entraînée par les premiers moyens d'entraînement, et que le deuxième dispositif de convoyage comprenne une troisième bande de convoyage identique à la première, disposée symétriquement à celle-ci par rapport à la deuxième bande et entraînée par les deuxièmes moyens d'entraînement, les troisièmes bandes étant au moins en partie dans le prolongement l'une de l'autre.

Qu'il soit prévu deux ou trois bandes par convoyeur, ces dispositifs assurent un meilleur transfert de l'objet du premier dispositif de convoyage sur le deuxième dispositif de convoyage. En effet, l'objet, lorsqu'il quitte la deuxième bande du premier dispositif de convoyage pour atteindre la deuxième bande du deuxième dispositif de convoyage, se trouve dans l'espace sans support entre les deux bandes. Mais parallèlement, une partie de l'objet se trouve toujours sur la première bande, et le cas échéant sur la troisième bande, du premier dispositif de convoyage. Une partie de l'objet est donc toujours portée par une ou deux bandes du premier dispositif de convoyage. Il n'y a donc pas de discontinuité dans le soutien de l'objet lorsqu'il passe du premier au deuxième dispositif de convoyage.

Selon les besoins, les bandes peuvent être constituées par des courroies, des bandes à plateaux ou des grilles articulées.

Afin de permettre le stockage et le prélèvement de plusieurs objets stockés sur des rangées perpendiculaires à la direction d'avancement du dispositif de convoyage, il est possible de prévoir que le ou les premiers dispositifs de convoyage soient constitués de plusieurs jeux de première et deuxième bandes, ou de jeux de première, de deuxième et de troisième bandes, disposés côte à côte, et que le deuxième dispositif de convoyage soit constitué d'autant de jeux de première et de deuxième bandes, ou de jeux de première, de deuxième et de troisième bandes, disposés côte à côte de telle sorte qu'à chaque jeu du premier dispositif de convoyage correspond un jeu du deuxième dispositif de convoyage.

Dans un mode de réalisation privilégié de l'invention, le dispositif comprend plusieurs premiers dispositifs de convoyage identiques disposés les uns au-dessus des autres, le deuxième dispositif de convoyage pouvant être placé par les moyens de déplacement tour à tour dans l'alignement de chacun d'entre eux de sorte qu'un objet placé sur le premier dispositif de convoyage dans l'alignement duquel se trouve le deuxième dispositif de convoyage peut être transmis à ce dernier. Ainsi, le deuxième dispositif de convoyage peut être utilisé avec plusieurs premiers dispositifs de convoyage, ce qui permet d'augmenter la quantité d'objets stockés.

Afin de faciliter le positionnement de l'objet sur le deuxième dispositif de convoyage, il est préférable de prévoir une butée à l'extrémité avant du deuxième dispositif de convoyage, c'est-à-dire à l'opposé au premier dispositif de convoyage.

L'invention concerne également un procédé d'utilisation du dispositif de l'invention pour stocker un objet sur un premier dispositif de convoyage et le prélever sur un deuxième dispositif de convoyage afin de le conduire à une position de distribution, caractérisé par les étapes suivantes :
(a) le deuxième dispositif de convoyage est déplacé par les moyens de déplacement pour être aligné avec le ou l'un des premiers dispositifs de convoyage ;
(b) le deuxième dispositif de convoyage et le premier dispositif de convoyage dans l'alignement duquel se trouve le deuxième dispositif de convoyage sont mis en marche avant de sorte que l'objet situé sur le premier dispositif de convoyage est déplacé en direction du deuxième dispositif de convoyage, les autres premiers dispositifs de convoyage s'il y en a restant à l'arrêt ;
(c) l'objet quitte une partie du premier dispositif de convoyage et atteint une partie du deuxième dispositif de convoyage ;
(d) le deuxième dispositif de convoyage est déplacé vers le haut d'une hauteur (h) prédéterminée, cette l'étape (d) étant réalisée dès que l'objet a quitté la deuxième bande du premier dispositif de convoyage tout en étant toujours sur la première bande et le cas échéant la troisième bande et qu'il a atteint la deuxième bande du deuxième dispositif de convoyage sans avoir encore atteint la première bande et le cas échéant la troisième bande ;
(e) le premier dispositif de convoyage est arrêté et le deuxième dispositif de convoyage est arrêté dès que l'objet a atteint une position déterminée sur le deuxième dispositif de convoyage;
(f) le deuxième dispositif de convoyage est déplacé par les moyens de déplacement jusqu'à une position de distribution.

De plus, il est préférable qu'à l'étape (e), le premier dispositif de convoyage soit tout d'abord mis en marche arrière avant d'être arrêté.

Afin de permettre le redressement d'un objet qui se serait mis de travers lors du transfert sur le deuxième dispositif de convoyage, il est possible à l'étape (e) de maintenir le deuxième dispositif de convoyage en marche avant jusqu'à ce que l'objet vienne buter contre une butée. Dans ce cas, on peut prévoir de mettre en marche arrière le deuxième dispositif de convoyage après que l'objet a buté contre la butée jusqu'à ce que l'objet a atteint une position intermédiaire déterminée sur le deuxième dispositif de convoyage.

L'invention est décrite plus en détail ci-dessous à l'aide d'un exemple de réalisation présenté sur les figures qui montrent :
- Figure 1 :: une vue schématique de dessus du dispositif ;
- Figure 2 :: une vue de côté du dispositif de l'invention, la partie mobile étant (a) en position alignée et (b) en position surélevée ;
- Figure 3 :: une vue schématique en perspective du dispositif de l'invention, la partie mobile étant (a) en position alignée et (b) en position surélevée ;
- Figure 4 :: une représentation schématique des différentes étapes du procédé de prélèvement ;
- Figure 5 :: une vue schématique du dispositif de l'invention intégré dans une machine automatique de stockage et de cuisson de pains ;
- Figure 6 :: vue schématique du dispositif de la figure 1 selon une variante de réalisation.

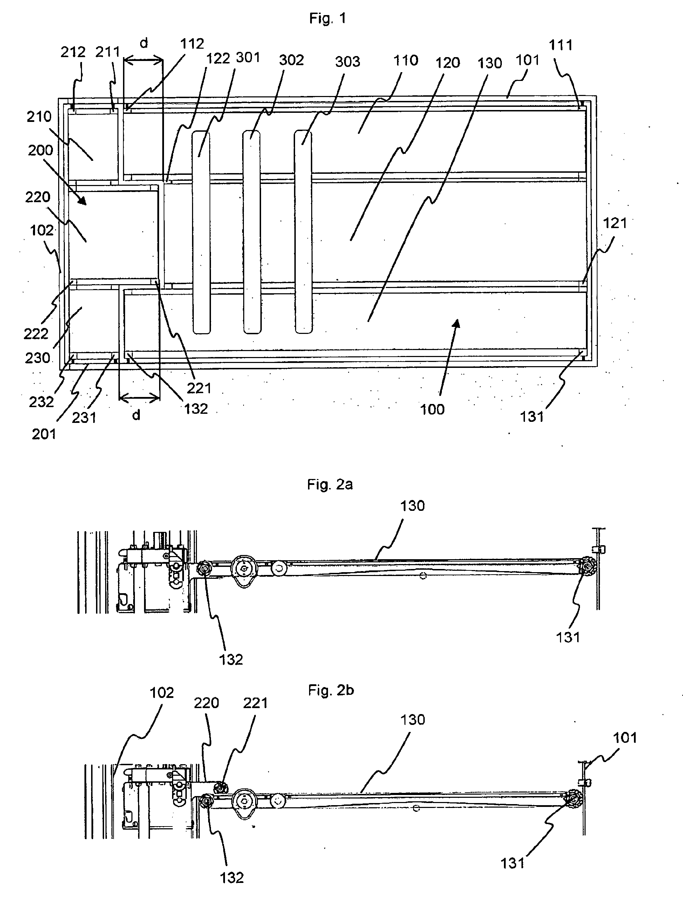

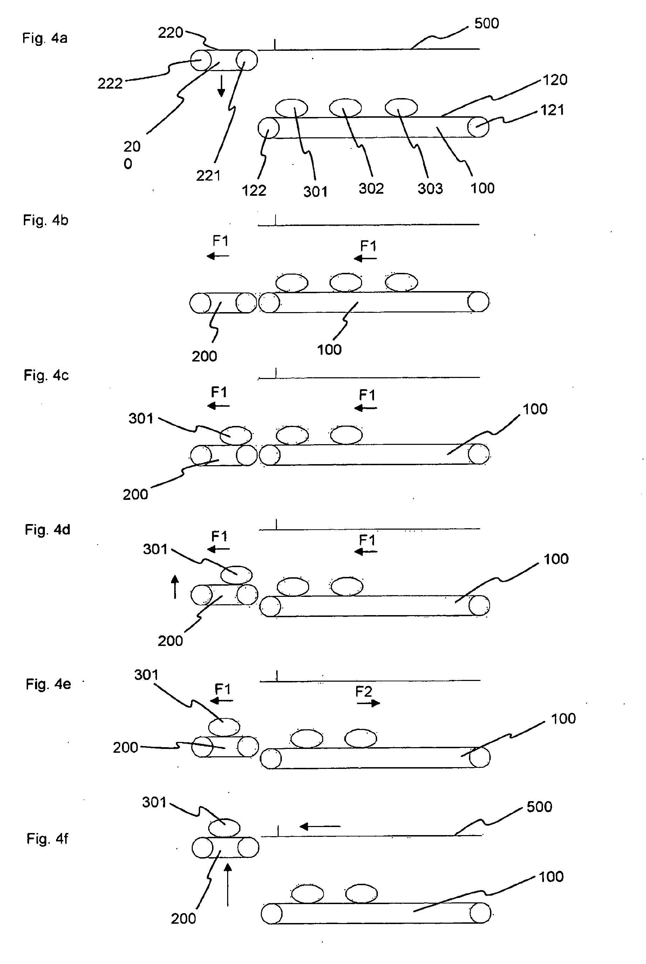

L'invention concerne un dispositif de stockage et de distribution. L'exemple de réalisation présenté aux figures 1 à 6 est destiné au stockage et au prélèvement de baguettes précuites devant être ensuite enfournées dans un four pour finir la cuisson. Cependant, le dispositif de l'invention peut être utilisé dans tout autre domaine.

Par convention, l'avant du dispositif se trouve du côté du deuxième dispositif de convoyage (200) opposé au premier dispositif de convoyage (100). Concrètement, l'avant se trouve sur la gauche des figures, tandis que l'arrière se trouve sur la droite. Mettre un dispositif de convoyage en marche avant revient à dire que sa face supérieure, sur laquelle repose l'élément à transmettre, se déplace vers la gauche. À contrario, mettre en marche arrière revient à déplacer la face supérieure du convoyeur vers la droite.

Le dispositif de l'invention est composé de deux parties principales : une partie fixe (100) et une partie mobile (200).

La partie fixe (100) est constituée par un plateau horizontal fixé dans un cadre (101). Le plateau comprend trois bandes de convoyage sans fin (110, 120, 130) parallèles placées côte à côte. Ces trois bandes peuvent être entraînées dans un même mouvement par un moteur non représenté et constituant des premiers moyens d'entraînement. Chaque bande est tendue entre deux rouleaux (111, 112 ; 121, 122 ; 131, 132). Les six rouleaux sont parallèles. Les trois rouleaux arrière (111, 121, 131), situés à droite sur les figures, sont alignés et pourraient être réunis en un seul rouleau commun. Le rouleau avant (122) de la bande centrale (120) est placé plus en arrière d'une distance (d) que les rouleaux avant (112, 132) des deux bandes extérieures (110, 130) : la bande centrale (120) est plus courte que les deux bandes extérieures (110, 130). Cette partie fixe (100) constitue le premier dispositif de convoyage.

La partie mobile (200) est constituée par un plateau mobile horizontal. Dans un premier mode de réalisation représenté aux figures 1 à 5, le plateau mobile comprend également trois bandes de convoyage (210, 220, 230) placées côte à côte, parallèles entre elles et aux bandes de convoyage (110, 120, 130) du plateau fixe. Ces trois bandes peuvent être entraînées dans un même mouvement par un moteur non représenté et constituant des deuxièmes moyens d'entraînement. Chaque bande est tendue entre deux rouleaux (211, 212 ; 221,222 ; 231, 232). Les six rouleaux sont parallèles entre eux et aux rouleaux (111, 112 ; 121, 122 ; 131, 132) du plateau fixe. Les trois rouleaux avant (212, 222, 232), à gauche sur les figures, sont alignés et pourraient être réunis en un seul rouleau commun. Le rouleau arrière (221) de la bande centrale (220) est placé plus en arrière d'une distance (d) que les rouleaux arrière (211, 231) des deux bandes extérieures (210, 230) : la bande centrale (220) est plus longue que les deux bandes extérieures (210, 230). Cette partie mobile constitue le deuxième dispositif de convoyage.

La différence de longueur (d) entre les bandes externes (110, 130) et la bande centrale (120) du plateau fixe est sensiblement égale à la différence de longueur (d) entre la bande centrale (220) et les bandes externes (210, 230) du plateau mobile. Elle est de préférence supérieure à la distance séparant l'axe de rotation des rouleaux avant (112, 122, 132) des bandes du premier dispositif de convoyage et l'axe de rotation des rouleaux arrière (211, 221, 231) des bandes correspondantes du deuxième dispositif de convoyage.

Vues de dessus (figure 1), les premières bandes (110, 210) sont sensiblement dans le prolongement l'une de l'autre. Il en est de même des deuxièmes bandes (120, 220) d'une part et des troisièmes bandes (130, 230) d'autre part. Il est possible que deux bandes bien que sensiblement dans le prolongement l'une de l'autre n'aient pas exactement la même largeur et/ou que leurs bords latéraux ne soient pas exactement en face les uns des autres sans que cela gène le fonctionnement du dispositif.

Le plateau mobile (200) peut se déplacer le long d'un cadre (201) dans un mouvement vertical par des moyens de déplacement non représentés. Il peut être aligné avec le plateau mobile, c'est-à-dire que ses bandes de transport (210, 220, 230) se trouvent dans le même plan horizontal que les bandes (110, 120, 130) du plateau fixe. Il peut également être déplacé dans d'autres positions qui seront décrites plus bas.

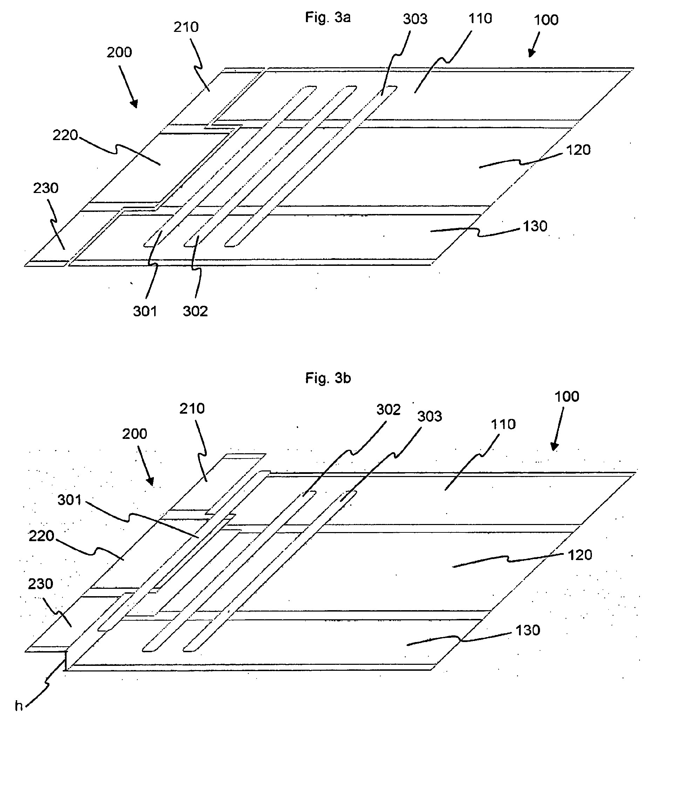

Dans la position alignée représentée aux figures 2a et 3a, les rouleaux avant (112, 122, 132) des bandes du plateau fixe sont aussi proches que possible des rouleaux arrière (211, 221, 231) du plateau mobile de telle sorte que l'espace qui sépare les bandes du plateau fixe de celles du plateau mobile soit aussi faible que possible tout en empêchant un frottement entre elles.

Les bandes de transport (110, 120, 130, 210, 220, 230) peuvent se présenter sous différentes formes. Il peut s'agir de courroies, de bandes à plateaux ou de grilles articulées.

Le dispositif peut contenir plusieurs plateaux fixes (100) identiques placés les uns au-dessus des autres dans le cadre (101) de sorte que les rouleaux avant (112, 132) des bandes extérieures soient placés dans un même plan vertical et les rouleaux avant (122) des bandes centrales dans un même plan vertical en retrait, c'est-à-dire plus à droite sur les figures. Ainsi, la partie mobile (200) peut être placée par les moyens de déplacement tour à tour dans l'alignement des différents plateaux fixes (100) de sorte qu'un objet placé sur le plateau fixe dans l'alignement duquel se trouve le plateau mobile peut être transmis à ce dernier.

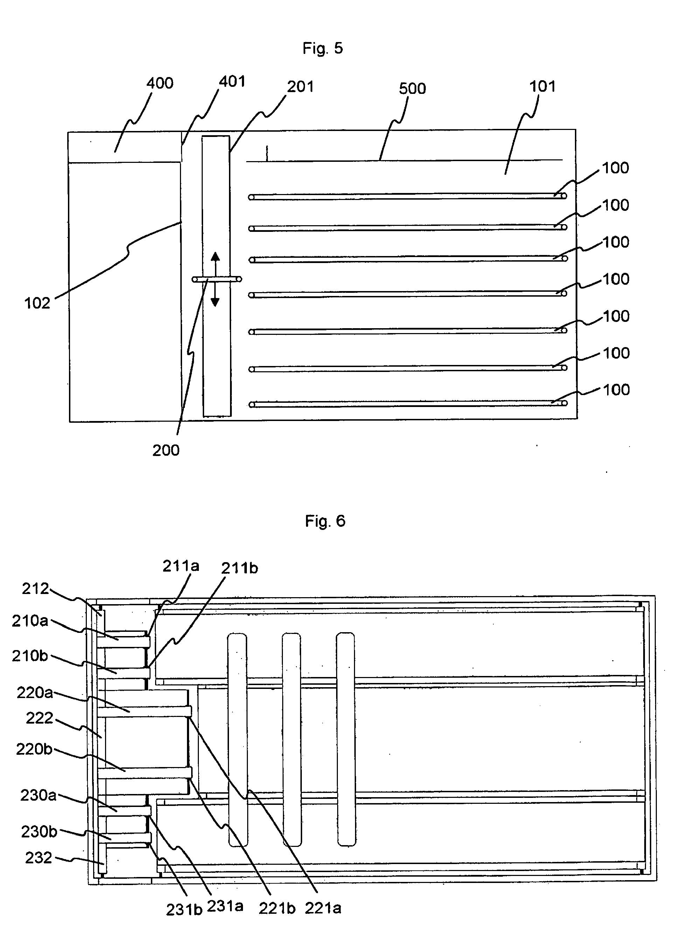

Le dispositif de l'invention peut être intégré à une machine de cuisson automatique telle que celle représentée schématiquement à la figure 5. Plusieurs plateaux fixes (100) sont placés les uns au-dessus des autres dans un cadre (101) formant les cinq pans d'une enceinte. À l'avant des plateaux fixes se trouve le plateau mobile (200) monté sur un cadre (201) situé dans le prolongement du cadre (101). Au-dessus du plateau supérieur, on trouve un dispositif (500) pour enfourner une baguette située sur le plateau mobile (200) placé en position de distribution dans un four (400) situé en face du dispositif d'enfournement (500). L'enceinte constituée par le cadre (101) et le cadre (201) est fermée sur l'avant par une paroi (102) qui se prolonge dans sa partie supérieure par la porte (401) du four. Cette enceinte peut être réfrigérée pour garantir une meilleure conservation des baguettes précuites.

Le dispositif de l'invention fonctionne de la façon suivante. Des baguettes précuites (301, 302, 303) sont placées sur les plateaux fixes (100), parallèlement les unes aux autres et perpendiculairement aux bandes de transport (110, 120, 130). Le prélèvement se déroule selon les étapes suivantes :
a) Le plateau mobile (200) est déplacé par les moyens de déplacement pour le mettre dans l'alignement de l'un des plateaux fixes (100), comme sur les figures 2a, 3a, 4b.
b) Les bandes de transport du plateau fixe et celles du plateau mobile sont mises en marche de telle sorte que leurs faces supérieures se déplacent à la même vitesse vers la gauche dans le sens de la flèche (F1). Les baguettes (301, 302, 303) du plateau fixe se déplacent dans le même sens.
c) La première baguette (301) quitte la bande centrale (120) du plateau fixe pour passer sur la bande centrale (220) du plateau mobile tout en restant avec ses extrémités sur les bandes extérieures (110, 130) du plateau fixe.
d) Dès que toute la partie centrale de la baguette est passée sur la bande centrale (220) du plateau mobile, celui-ci est légèrement remonté dans la position surélevée représentée aux figures 2b et 3b, 4d. Les extrémités de la baguette prélevée (301) quittent les bandes extérieures (110, 130) du plateau fixe.
e) Parallèlement, les bandes du plateau fixe sont arrêtées tandis que les bandes du plateau mobile continuent de se déplacer vers l'avant dans le sens de la flèche (F1) jusqu'à ce que les extrémités de la baguette prélevée (301) se trouvent sur les bandes extérieures (210, 230) du plateau mobile. Les bandes de transport (210, 220, 230) du plateau mobile sont à leur tour arrêtées.
f) Le plateau mobile (200) est déplacé dans un mouvement vertical jusqu'à la position de distribution. Dans l'exemple présenté ici, cette position se trouve face à l'entrée du four (400), devant le dispositif d'enfournement (500).

À l'étape e), il peut être utile, lorsque le plateau mobile est déplacé en position surélevée, de mettre en marche arrière quelque temps les bandes de transport (110, 120, 130) du plateau fixe de sorte que leur partie supérieure recule dans le sens de la flèche (F2). Cela évite qu'une deuxième baguette placée trop près ne soit prélevée en même temps que la baguette précédente.

Il peut être utile de prévoir une butée à l'extrémité avant (à gauche sur les figures) des bandes de transport (210, 220, 230) de la partie mobile pour redresser une baguette qui se serait mise de travers lors du prélèvement. Ainsi, sa première extrémité vient buter contre la butée tandis que le reste de la baguette est toujours entraîné par les bandes de transport jusqu'à ce que la baguette soit à nouveau perpendiculaire à celles-ci. Une fois la baguette redressée, il peut être utile de la recentrer sur le plateau mobile en mettant les bandes de transport du plateau mobile en marche arrière le temps nécessaire.

La butée peut faire partie intégrante du plateau mobile. Cependant, dans le cas présenté dans les figures, une telle butée empêcherait l'enfournement de la baguette. Elle peut donc être constituée par la porte du four (401), auquel cas le redressement d'une baguette placée de travers ne peut se faire qu'en position de distribution. Elle peut également être constituée par la paroi avant (102) de la chambre de stockage, paroi (102) le long de laquelle se déplace le plateau mobile (200).

Dans une variante de réalisation de l'invention, les bandes du deuxième dispositif de convoyage (200) sont subdivisées en deux ou plusieurs sous-bandes (210a/b, 220a/b, 230a/b) comme le montre schématiquement la figure 6. On pourra par exemple choisir des grilles articulées pour les deux ou trois bandes (110, 120, 130) du dispositif de convoyage fixe (100) et des courroies pour le dispositif de convoyage mobile (200). Le fonctionnement est le même que pour le premier exemple. Chaque sous-bande est dans le prolongement de la bande correspondante du premier dispositif de convoyage (100) et elle est tendue entre deux rouleaux (211 a/b, 221 a/b, 231 a/b ; 212, 222, 232). Comme précédemment, les deux sous-bandes centrales (221a/b) sont plus longues que les quatre sous-bandes extérieures (211a/b, 231a/b). Ce mode de réalisation est choisi de préférence lorsque le dispositif d'enfournement (500) est constitué par une pelle munie de plusieurs doigts. Le nombre et la position des courroies (210a/b, 220a/b, 230a/b) sont choisis en fonction du nombre et de la position des doigts sur la pelle. Dans l'exemple présenté ici, la pelle aura par exemple cinq doigts qui pourront être placés entre les courroies successives. Pour le déchargement du dispositif de convoyage mobile, celui-ci est monté légèrement plus haut que les doigts de la pelle. Celle-ci est avancée de telle sorte que ses doigts soient placés entre deux courroies successives, à une hauteur située entre les axes de rotation des rouleaux (211 a/b, 221 a/b, 231a/b) et la baguette à saisir. Le dispositif de convoyage mobile (200) est alors redescendu et la baguette est retenue par les doigts de la pelle.

La commande du dispositif peut être assurée par une unité de commande non représentée. Le choix du plateau fixe duquel sera prélevée la baguette dépendra de critères mémorisés dans l'unité de commande. Notamment, il sera possible de recharger l'un ou l'autre plateau et de mémoriser l'heure de chargement. Il n'est donc pas nécessaire d'attendre que l'ensemble du dispositif soit vide avant de le recharger. L'unité de commande choisira alors de prélever une baguette du plateau ayant la durée de stockage la plus élevée. Si cette durée a dépassé une valeur limite, l'unité de commande mettra en quarantaine le plateau correspondant et enverra le plateau mobile vers un autre niveau.

Des capteurs peuvent être placés à différents endroits stratégiques. Notamment, on pourra prévoir un capteur qui détermine le moment où le centre de la baguette sera passé entièrement sur la bande centrale (220) du plateau mobile pour déclencher le soulèvement de celui-ci. Un autre capteur pourra déterminer si la baguette se trouve bien perpendiculairement sur les bandes du plateau mobile, ou s'il faut lancer une procédure de redressement. Des capteurs pourront déterminer la position verticale du plateau mobile.

Grâce au dispositif de l'invention, on est sûr de transmettre la baguette en conservant son orientation, c'est-à-dire que sa face supérieure reste dirigée vers le haut. Cela est important notamment si le dispositif sert à amener une baguette devant un four de cuisson. En plaçant plusieurs plateaux les uns au-dessus des autres, on augmente considérablement la capacité de stockage du dispositif tout en n'ayant besoin que d'un plateau mobile. Avec une bande centrale entourée de deux bandes externes, on assure un transfert sûr d'un seul objet à la fois sans discontinuité de soutien.

L'exemple de réalisation présenté ici peut être généralisé.

La transition entre les deux plateaux, réalisée par la bande centrale plus courte sur le plateau fixe et celle plus longue sur le plateau mobile, permet un passage sans discontinuité du plateau fixe au plateau mobile : à aucun moment la baguette ne se trouve sans support entre les bandes du plateau fixe et celles du plateau mobile.

Cependant, si l'objet à faire passer du plateau fixe au plateau mobile est suffisamment large et/ou rigide, il est possible de renoncer à ce décrochement de sorte que les trois rouleaux avant (112, 122, 132) du plateau fixe sont alignés ensemble de même que les rouleaux arrières (211, 221, 231) du plateau mobile. Dans ce cas, il serait même possible de renoncer aux trois bandes pour n'en conserver qu'une.

Au contraire, si les objets stockés sur les plateaux fixes ont des dimensions telles qu'il est possible d'en mettre plusieurs sur une même rangée perpendiculaire aux bandes de transport, il sera possible de prévoir plusieurs jeux de bandes de transports, et donc plusieurs décrochements. Prenons pour exemple des pizzas qui peuvent être placées par rangées de trois. Le plateau mobile aura alors trois jeux de trois bandes de transport, la bande centrale de chaque jeu étant plus courte que les bandes extérieures de chaque jeu. De même, le plateau mobile aura trois jeux de trois bandes de transport, la bande centrale de chaque jeu étant plus longue que les bandes extérieures de chaque jeu. On pourra même prévoir de réunir en une bande commune les bandes extérieures contiguës de deux jeux successifs.

## Revendications

1. Dispositif de stockage et de prélèvement constitué d'un premier dispositif de convoyage linéaire (100) et d'un deuxième dispositif de convoyage linéaire (200) parallèle au premier et placé dans l'alignement de celui-ci de sorte qu'un objet (301 - 303) placé sur le premier dispositif de convoyage (100) peut être transmis au deuxième dispositif de convoyage (200), des moyens étant prévus pour déplacer le deuxième dispositif de convoyage (200) dans un mouvement perpendiculaire à sa direction de convoyage de sorte que le deuxième dispositif de convoyage (200) peut être déplacé de sa position située dans l'alignement du premier dispositif de convoyage (100) à une position de distribution, le premier dispositif de convoyage (100) étant constitué d'au moins deux bandes de convoyage (110, 120) parallèles placées côte à côte, **caractérisé en ce que** la première bande (110) du premier dispositif de convoyage (100) s'étend plus en avant en direction du deuxième dispositif de convoyage (200) d'une distance (d) que la deuxième bande (120) du premier dispositif de convoyage (100), et **en ce que** le deuxième dispositif de convoyage (200) est constitué d'au moins deux bandes de convoyage (210, 220) parallèles placées côte à côte, la première bande (210) du deuxième dispositif de convoyage (200) s'étendant moins en arrière en direction du premier dispositif de convoyage (100) de la distance (d) que la deuxième bande (220) du deuxième dispositif de convoyage (200), les premières bandes (110, 210) étant au moins en partie dans le prolongement l'une de l'autre et les deuxièmes bandes (120, 220) étant au moins en partie dans le prolongement l'une de l'autre, des premiers moyens d'entraînement étant prévus pour entraîner dans un même mouvement les deux bandes (110, 120) du premier dispositif de convoyage et des deuxièmes moyens d'entraînement étant prévus pour entraîner dans un même mouvement les deux bandes (210, 220) du deuxième dispositif de convoyage.

2. Dispositif de stockage et de prélèvement selon la revendication précédente, **caractérisé en ce que** le premier dispositif de convoyage (100) comprend une troisième bande de convoyage (130) identique à la première (110), disposée symétriquement à celle-ci par rapport à la deuxième bande (120) et entraînée par les premiers moyens d'entraînement, et **en ce que** le deuxième dispositif de convoyage (200) comprend une troisième bande de convoyage (230) identique à la première (210), disposée symétriquement à celle-ci par rapport à la deuxième bande (220) et entraînée par les deuxièmes moyens d'entraînement, les troisièmes bandes (130, 230) étant au moins en partie dans le prolongement l'une de l'autre.

3. Dispositif selon l'une des revendications précédentes, **caractérisé en ce que** les bandes (110, 120, 130, 210, 220, 230) sont constituées par des courroies, des bandes à plateaux ou des grilles articulées.

4. Dispositif selon l'une des revendications précédentes, **caractérisé en ce que** chacune des bandes du deuxième dispositif de convoyage (200) est subdivisée en deux sous-bandes (210a/b, 220a/b, 230a/b) parallèles entre elles et parallèles aux bandes du premier dispositif de convoyage (100), chacune de ces sous-bandes étant située dans le prolongement de la bande correspondante (110, 120, 130) du premier dispositif de convoyage.

5. Dispositif selon l'une des revendications précédentes, **caractérisé en ce que** le ou les premiers dispositifs de convoyage (100) sont constitués de plusieurs jeux de première et deuxième bandes (110, 120), ou de plusieurs jeux de première, deuxième et troisième bandes (110, 120, 130), disposés côte à côte et que le deuxième dispositif de convoyage (200) est constitué d'autant de jeux de première et de deuxième bande (210, 220), ou de jeux de première, de deuxième et de troisième bandes (210, 220, 230), ces jeux étant disposés côte à côte de telle sorte qu'à chaque jeu du premier dispositif de convoyage correspond un jeu du deuxième dispositif de convoyage.

6. Dispositif de stockage et de prélèvement selon l'une des revendications précédentes, **caractérisé en ce qu'**il comprend plusieurs premiers dispositifs de convoyage (100) identiques disposés les uns au-dessus des autres de telle sorte que le deuxième dispositif de convoyage (200) peut être placé par les moyens de déplacement tour à tour dans l'alignement de chacun d'entre eux de sorte qu'un objet placé sur le premier dispositif de convoyage dans l'alignement duquel se trouve le deuxième dispositif de convoyage (200) peut être transmis à ce dernier (200).

7. Dispositif de stockage et de prélèvement selon l'une des revendications précédentes, **caractérisé en ce qu'**une butée (102) est prévue à l'extrémité du deuxième dispositif de convoyage (200) opposée au premier dispositif de convoyage (100).

8. Procédé d'utilisation du dispositif selon l'une des revendications précédentes pour stocker un objet (301) sur le ou l'un des premiers dispositifs de convoyage (100) et le prélever sur le deuxième dispositif de convoyage (200) afin de le conduire à une position de distribution, comprenant les étapes suivantes :
(a) le deuxième dispositif de convoyage (200) est déplacé par les moyens de déplacement pour être aligné avec le ou l'un des premiers dispositifs de convoyage (100) ;
(b) le deuxième dispositif de convoyage (200) et le premier dispositif de convoyage (100) dans l'alignement duquel se trouve le deuxième dispositif de convoyage (200) sont mis en marche avant de sorte que l'objet (301) situé sur le premier dispositif de convoyage (100) est déplacé en direction du deuxième dispositif de convoyage (200), les autres premiers dispositifs de convoyage (100) s'il y en a restant à l'arrêt ;
(c) l'objet (301) quitte une partie (120) du premier dispositif de convoyage (100) et atteint une partie (220) du deuxième dispositif de convoyage (200) ;
(d) le deuxième dispositif de convoyage (200) est déplacé vers le haut d'une hauteur prédéterminée (h), cette l'étape (d) étant réalisée dès que l'objet a quitté la deuxième bande (120) du premier dispositif de convoyage tout en étant toujours sur la première bande (120) et le cas échéant la troisième bande (130) et qu'il a atteint la deuxième bande (220) du deuxième dispositif de convoyage sans avoir encore atteint la première bande (210) et le cas échéant la troisième bande (230) ;
(e) le premier dispositif de convoyage (100) est arrêté et le deuxième dispositif de convoyage (200) est arrêté dès que l'objet (301) a atteint une position déterminée sur le deuxième dispositif de convoyage ;
(f) le deuxième dispositif de convoyage (200) est déplacé par les moyens de déplacement jusqu'à une position de distribution.

9. Procédé selon la revendication 8, **caractérisé en ce qu'**à l'étape (e), le premier dispositif de convoyage est tout d'abord mis en marche arrière avant d'être arrêté.

10. Procédé selon l'une des revendications 8 ou 9, **caractérisé en ce qu'**à l'étape (e), le deuxième dispositif de convoyage (200) est maintenu en marche avant jusqu'à ce que l'objet vienne buter contre la butée (104).

11. Procédé selon la revendication précédente, **caractérisé en ce que** le deuxième dispositif de convoyage (200) est mis en marche arrière après que l'objet a buté contre la butée (104) jusqu'à ce que l'objet a atteint une position intermédiaire déterminée sur le deuxième dispositif de convoyage.

## Patentansprüche

1. Vorrichtung zum Lagern und Entnehmen, die von einer ersten linearen Fördervorrichtung (100) und einer zweiten linearen Fördervorrichtung (200) gebildet wird, die zur ersten parallel ist und so in deren Fluchtung angeordnet ist, dass ein auf der ersten Fördervorrichtung (100) angeordneter Gegenstand (301-303) auf die zweite Fördervorrichtung (200) übertragen werden kann, wobei Mittel vorgesehen sind, um die zweite Förderungsvorrichtung (200) in einer zu ihrer Förderrichtung senkrechten Bewegung so zu verlagern, dass die zweite Fördervorrichtung (200) von ihrer Position, die sich in der Fluchtung der ersten Fördervorrichtung (100) befindet, zu einer Ausgabeposition verlagert werden kann, wobei die erste Förderungsvorrichtung (100) aus mindestens zwei, parallelen nebeneinander angeordneten Förderbändern (110, 120) gebildet wird, **dadurch gekennzeichnet, dass** das erste Band (110) der ersten Fördervorrichtung (100) sich in Richtung der zweiten Fördervorrichtung (200) um eine Distanz (d) weiter nach vorne erstreckt als das zweite Band (120) der ersten Fördervorrichtung (100) und dass die zweite Fördervorrichtung (200) aus mindestens zwei, parallelen nebeneinander angeordneten Förderbändern (210, 220) gebildet wird, wobei das erste Band (210) der zweiten Fördervorrichtung (200) sich in Richtung der ersten Fördervorrichtung (100) um die Distanz (d) weniger weit nach hinten erstreckt als das zweite Band (220) der zweiten Fördervorrichtung (200), wobei die ersten Bänder (110, 210) sich mindestens teilweise in der Verlängerung voneinander befinden und wobei die zweiten Bänder (120, 220) sich mindestens teilweise in der Verlängerung voneinander befinden, wobei erste Antriebsmittel vorgesehen sind, um mit ein und derselben Bewegung die zwei Bänder (110, 120) der ersten Fördervorrichtung anzutreiben und wobei zweite Antriebsmittel vorgesehen sind, um mit ein und derselben Bewegung die zwei Bänder (210, 220) der zweiten Fördervorrichtung anzutreiben.

2. Vorrichtung zum Lagern und Entnehmen nach dem vorangehenden Anspruch, **dadurch gekennzeichnet, dass** die erste Fördervorrichtung (100) ein drittes Förderband (130) umfasst, das mit dem ersten (110) identisch ist und zu diesem in Bezug auf das zweite Band (120) symmetrisch angeordnet ist und von den ersten Antriebsmitteln angetrieben wird und dass die zweite Fördervorrichtung (200) ein drittes Förderband (230) umfasst, das mit dem ersten (210) identisch ist und zu diesem in Bezug auf das zweite Band (220) symmetrisch angeordnet ist und von den zweiten Antriebsmitteln angetrieben wird, wobei die dritten Bänder (130, 230) sich mindestens teilweise in der Verlängerung voneinander befinden.

3. Vorrichtung nach einem der vorangehenden Ansprüche, **dadurch gekennzeichnet, dass** die Bänder (110, 120, 130, 210, 220, 230) aus Gurten, Plattenband- oder gelenkigen Gitterelementen gebildet werden.

4. Vorrichtung nach einem der vorangehenden Ansprüche, **dadurch gekennzeichnet, dass** jedes der Bänder der zweiten Fördervorrichtung (200) in zwei Teilbänder (210a/b, 220a/b, 230a/b) unterteilt ist, die untereinander parallel und zu den Bändern der ersten Fördervorrichtung (100) parallel sind, wobei jedes dieser Teilbänder sich in der Verlängerung des korrespondierenden Bandes (110, 120, 130) der ersten Fördervorrichtung befindet.

5. Vorrichtung nach einem der vorangehenden Ansprüche, **dadurch gekennzeichnet, dass** die erste bzw. die ersten Fördervorrichtungen (100) von mehreren Sätzen von ersten und zweiten Bändern (110, 120), bzw. von mehreren Sätzen von ersten, zweiten und dritten Bändern (110, 120, 130) gebildet werden, die nebeneinander angeordnet sind und dass die zweite Fördervorrichtung (200) aus ebenso vielen Sätzen von ersten und zweiten Bändern (210, 220), bzw. Sätzen von ersten, zweiten und dritten Bändern (210, 220, 230) gebildet werden, wobei diese Sätze so nebeneinander angeordnet sind, dass jeder Satz der ersten Fördervorrichtung einem Satz der zweiten Fördervorrichtung entspricht.

6. Vorrichtung zum Lagern und Entnehmen nach einem der vorangehenden Ansprüche, **dadurch gekennzeichnet, dass** sie mehrere identische erste Fördervorrichtungen (100) umfasst, die so übereinander angeordnet sind, dass die zweite Fördervorrichtung (200) durch Verlagerungsmittel abwechselnd so in der Fluchtung von jeder von ihnen angeordnet werden kann, dass ein auf der ersten Fördervorrichtung angeordneter Gegenstand, in dessen Fluchtung sich die zweite Fördervorrichtung (200) befindet, auf diese letztere übertragen werden kann.

7. Vorrichtung zum Lagern und Entnehmen nach einem der vorangehenden Ansprüche, **dadurch gekennzeichnet, dass** ein Anschlag (102) am Ende der zweiten Fördervorrichtung (200), der der ersten Fördervorrichtung (100) gegenübersteht, vorgesehen ist.

8. Verfahren zur Anwendung der Vorrichtung nach einem der vorangehenden Ansprüche zum Lagern eines Gegenstandes (301) auf der bzw. einer der ersten Fördervorrichtungen (100) und zu dessen Entnahme auf die zweite Fördervorrichtung (200), um ihn zu einer Ausgabeposition zu leiten, wobei das Verfahren die folgenden Schritte umfasst:
(a) die zweite Fördervorrichtung (200) wird durch die Verlagerungsmittel zur Herstellung der Fluchtung mit der bzw. einer der ersten Fördervorrichtungen (100) verlagert;
(b) die zweite Fördervorrichtung (200) und die erste Fördervorrichtung (100), in deren Fluchtung sich die zweite Fördervorrichtung (200) befindet, werden so vorwärts gefahren, dass das Objekt (301), das sich auf der ersten Fördervorrichtung (100) befindet, in Richtung der zweiten Fördervorrichtung (200) verlagert wird, während die anderen ersten Fördervorrichtungen (100), falls vorhanden, stehen bleiben;
(c) der Gegenstand (301) verlässt einen Abschnitt (120) der ersten Fördervorrichtung (100) und erreicht einen Abschnitt (220) der zweiten Fördervorrichtung (200);
(d) die zweite Fördervorrichtung (200) wird nach oben auf eine vorgegebene Höhe (h) verlagert, wobei der Schritt (d) ausgeführt wird, sobald der Gegenstand das zweite Band (120) der ersten Fördervorrichtung verlassen hat und sich gleichzeitig noch auf dem ersten Band (110) und gegebenenfalls dem dritten Band (130) befindet und sobald er das zweite Band (220) der zweiten Fördervorrichtung erreicht hat, ohne noch das erste Band (210) und gegebenenfalls das dritte Band (230) erreicht zu haben;
(e) die erste Fördervorrichtung (100) wird gestoppt und die zweite Fördervorrichtung (200) wird gestoppt, sobald der Gegenstand (301) eine bestimmte Position auf der zweiten Fördervorrichtung erreicht hat;
(f) die zweite Fördervorrichtung (200) wird durch die Verlagerungsmittel bis zu einer Ausgabeposition verlagert.

9. Verfahren nach Anspruch 8, **dadurch gekennzeichnet, dass** in Schritt (e) die erste Fördervorrichtung zunächst rückwärts in Gang gesetzt wird, bevor sie gestoppt wird.

10. Verfahren nach einem der Ansprüche 8 oder 9, **dadurch gekennzeichnet, dass** in Schritt (e) die zweite Fördervorrichtung (200) so lange vorwärts in Gang gehalten wird, bis der Gegenstand am Anschlag (104) zur Anlage kommt.

11. Verfahren nach dem vorangehenden Anspruch, **dadurch gekennzeichnet, dass** die zweite Fördervorrichtung (200) nachdem der Gegenstand gegen den Anschlag (104) gestoßen ist, so lange rückwärts in Gang gesetzt wird, bis der Gegenstand eine bestimmte Zwischenposition auf der zweiten Fördervorrichtung erreicht hat.

## Claims

1. Storage and take-off device consisting of a first linear conveying device (100) and a second linear conveying device (200) parallel to the first and placed in line therewith so that an object (301-303) placed on the first conveying device (100) can be transmitted to the second conveying device (200), means being provided for moving the second conveying device (200) in a movement perpendicular to the direction of conveying thereof so that the second conveying device (200) can be moved from the position thereof situated in line with the first conveying device (100) to a distribution position, the first conveying device (100) consisting of at least two parallel conveyor bands (110, 120) placed side by side, **characterised in that** the first band (110) of the first conveying device (100) extends further forward in the direction of the second conveying device (200) by a distance (d) than the second band (120) of the first conveying device (100), and **in that** the second conveying device (200) consists of at least two parallel conveyor bands (210, 220) placed side by side, the first band (210) of the second conveying device (200) extending less to the rear in the direction of the first conveying device (100) by the distance (d) than the second band (220) of the second conveying device (200), the first bands (110, 210) being at least partly in line with each other and the second bands (120, 220) being at least partly in line with each other, first drive means being provided for driving, in the same movement, the two bands (110, 120) of the first conveying device and second drive means being provided for driving, in the same movement, the two bands (210, 220) of the second conveying device.

2. Storage and take-off device according to the preceding claim, **characterised in that** the first conveying device (100) comprises a third conveyor band (130) identical to the first (110), disposed symmetrically thereto with respect to the second band (120) and driven by the first drive means, and **in that** the second conveying device (200) comprises a third conveyor band (230) identical to the first (210), disposed symmetrically thereto with respect to the second band (220) and driven by the second drive means, the third bands (130, 230) being at least partly in line with each other.

3. Device according to one of the preceding claims, **characterised in that** the bands (110, 120, 130, 210, 220, 230) consist of belts, plate bands or articulated grilles.

4. Device according to one of the preceding claims, **characterised in that** each of the bands of the second conveying device (200) is subdivided into two sub-bands (210a/b, 220a/b, 230a/b) parallel to each other and parallel to the bands of the first conveying device (100), each of these sub-bands being situated in line with the corresponding band (110, 120, 130) of the first conveying device.

5. Device according to one of the preceding claims, **characterised in that** the first conveying device or devices (100) consist of several sets of first and second bands (110, 120), or of several sets of first, second and third bands (110, 120, 130), disposed side by side, and **in that** the second conveying device (200) consists of the same number of sets of first and second bands (210, 220), or sets of first, second and third bands (210, 220, 230), these sets being disposed side by side so that a set of the second conveying device corresponds to each set of the first conveying device.

6. Storage and take-off device according to one of the preceding claims, **characterised in that** it comprises several first identical conveying devices (100) disposed one above the other so that the second conveying device (200) can be placed by the moving means in turn in alignment with each of them so that an object placed on the first conveying device in alignment with which the second conveying device (200) is situated can be transmitted to the latter (200).

7. Storage and take-off device according to one of the preceding claims, **characterised in that** a stop (102) is provided at the end of the second conveying device (200) opposite to the first conveying device (100).

8. Method of use of the device according to one of the preceding claims for storing an object (301) on the first conveying device or one of the first conveying devices (100) and taking it off on the second conveying device (200) in order to conduct it to a distribution position, comprising the following steps:
(a) the second conveying device (200) is moved by the moving means so as to be aligned with the first conveying device or one of the first conveying devices (100);
(b) the second conveying device (200) and the first conveying device (100) in alignment with which the second conveying device (200) is situated are put in forward motion so that the object (301) situated on the first conveying device (100) is moved in the direction of the second conveying device (200), the other first conveying devices (100), if there are any, remaining at rest;
(c) the object (301) leaves a part (120) of the first conveying device (100) and reaches a part (220) of the second conveying device (200);
(d) the second conveying device (200) is moved upwards by a predetermined height (h), this step (d) being performed as soon as the object has left the second band (120) of the first conveying device while still being on the first band (120) and where applicable the third band (130) and as soon as it has reached the second band (220) of the second conveying device without having yet reached the first band (210) and where applicable the third band (230);
(e) the first conveying device (100) is stopped and the second conveying device (200) is stopped as soon as the object (301) has reached a given position on the second conveying device;
(f) the second conveying device (200) is moved by the moving means until it reaches a distribution position.

9. Method according to claim 8, **characterised in that**, at step (e), the first conveying device is first of all put in rearward motion before being stopped.

10. Method according to one of claims 8 or 9, **characterised in that**, at step (e), the second conveying device (200) is kept in forward motion until the object comes into abutment against the stop (104).

11. Method according to the preceding claim, **characterised in that** the second conveying device (200) is put in rearward motion after the object has come into abutment against the stop (104) until the object has reached a given intermediate position on the second conveying device.
